# FASCICULE DE BREVET EUROPEEN

(11) **EP 3 900 540 B1**
(45) Date de publication et mention de la délivrance du brevet: **27.08.2025**
(21) Numéro de dépôt: 20173134.6
(22) Date de dépôt: 06.05.2020
(51) Int. Cl.: A21D 6/00, A21D 8/00, A21D 8/02, A21D 8/04, A21D 13/00

(54) **PROCEDE DE PREPARATION D'UN PRODUIT ALIMENTAIRE FERMENTE SOUS VIDE**
ZUBEREITUNGSVERFAHREN EINES VAKUUMFERMENTIERTEN LEBENSMITTELPRODUKTS
METHOD FOR PREPARING A VACUUM-FERMENTED FOOD PRODUCT

(30) Priorité: 23.04.2020 FR 2004061
(43) Date de publication de la demande: 27.10.2021
(73) Titulaire: Cuisine Solutions Europe, 27400 Heudebouville (FR)
(72) Inventeur: JOURDIN, Christophe, 27400 HEUDEBOUVILLE (FR); CHIGNON, Hervé, 27400 HEUDEBOUVILLE (FR); MARQUET, Olivier, 27400 HEUDEBOUVILLE (FR)
(74) Mandataire: Cabinet Le Guen Maillet

(56) Documents cités:
- EP-A1- 1 900 642
- DE-A1- 19 730 628
- US-A1- 2008 063 758
- DATABASE WPI Week 200236, Derwent World Patents Index; AN 2002-322035, XP002799975

## Description

### DOMAINE TECHNIQUE

La présente invention concerne un procédé de préparation d'un produit fermenté sous vide, en particulier du type sandwich ou burgers.

### ETAT DE LA TECHNIQUE ANTERIEURE

La préparation d'un sandwich ou d'un burger consiste actuellement à réaliser séparément le pain et la garniture, puis à introduire la garniture dans le pain, et enfin éventuellement à introduire l'ensemble dans une poche protectrice sous vide d'air ou non en rajoutant un gaz favorisant la conservation du produit. EP 1 900 642 A1 et US 2008/063758 A1 divulguent de procédés de production d'un produit de boulangerie entièrement cuit. JP 2002 017242 A décrit un procédé pour la conservation d'un pain mi-cuit au réfrigérateur.

Ce type de préparation présente entre autres le désavantage d'être manipulé par différentes personnes au cours de son élaboration ce qui peut entraîner la dépose de produits ou germes contaminants sur la préparation.

Il est donc nécessaire de trouver un procédé de préparation qui empêche l'apparition d'une telle contamination.

### EXPOSE DE L'INVENTION

Un objet de la présente invention est de proposer un procédé de préparation d'un produit alimentaire fermenté sous vide qui empêche tout contact avec le produit alimentaire dès le début de sa préparation.

A cet effet, est proposé un procédé de préparation d'un produit alimentaire comportant une partie boulangère et des ingrédients, ledit procédé comportant :
- une première étape de préparation au cours de laquelle les ingrédients sont préparés,
- une étape de fourniture au cours de laquelle des pâtons sont fournis,
- une étape de conditionnement au cours de laquelle les pâtons ainsi fournis et les ingrédients ainsi préparés sont assemblés dans un ensemble et disposés dans une poche étanche et scellée sous-vide d'air,
- une étape de fermentation au cours de laquelle les pâtons contenus dans l'ensemble constitué des pâtons et des ingrédients et enfermé dans la poche scellée, subissent une fermentation,
- une étape de cuisson au cours de laquelle l'ensemble ainsi fermenté dans la poche scellée est soumis à une cuisson, et
- une étape de refroidissement au cours de laquelle l'ensemble dans la poche scellée est refroidi.

Ainsi, un tel procédé de préparation permet d'introduire tous les éléments dans la poche dès le début de la préparation et avant la cuisson ce qui évite entre autres une contamination après la cuisson.

Avantageusement, suite à l'étape de refroidissement, le procédé de préparation comporte une étape de surgélation de l'ensemble dans la poche scellée.

Avantageusement, lors de la première étape de préparation, les ingrédients utilisés sont crus.

Avantageusement, l'étape de fourniture consiste à décongeler des pâtons de pâte surgelés.

Avantageusement, l'étape de fourniture comporte une deuxième étape de préparation au cours de laquelle la pâte de la partie boulangère est préparée, et une troisième étape de préparation au cours de laquelle la pâte issue de la deuxième étape de préparation subit une sous-étape de division au cours de laquelle des pâtons sont formés et une sous-étape de formage au cours de laquelle chaque pâton est conformé selon la forme souhaitée de la partie boulangère.

Avantageusement, le procédé de préparation comporte entre l'étape de préparation et l'étape de conditionnement, une étape de coloration superficielle au cours de laquelle la surface extérieure des pâtons est colorée.

Avantageusement, les ingrédients sont colorés en surface au cours de la première étape de préparation.

Avantageusement, le procédé de préparation comporte au cours de l'étape de conditionnement et après la mise sous vide d'air, une étape d'injection de dioxyde de carbone ou d'azote au cours de laquelle ledit gaz est injecté avant scellage de la poche.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

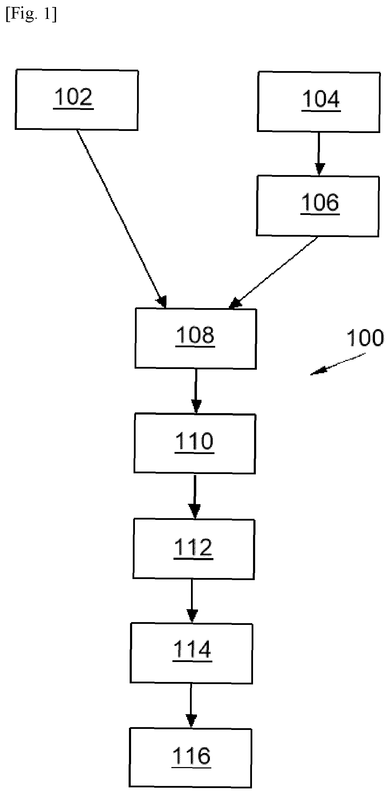

[Fig. 1] illustre schématiquement un algorithme d'un procédé de préparation d'un produit alimentaire selon l'invention.

### EXPOSE DETAILLE DE MODES DE REALISATION

La Fig. 1 montre un procédé de préparation 100 d'un produit alimentaire du type sandwich ou burger, qui est constitué d'une partie boulangère et d'ingrédients qui sont arrangés dans la partie boulangère. La partie boulangère est réalisée à partir de matières premières traditionnelles de boulangerie comme, en particulier, la farine, l'eau, la levure et le sel.

Le procédé de préparation 100 comporte une première étape de préparation 102 au cours de laquelle les ingrédients sont préparés. Ces ingrédients peuvent être de différentes formes, il peut s'agir par exemple de légumes, de produits carnés crus ou cuits, de sauces...

Le procédé de préparation 100 comporte une étape de fourniture 104, 106 au cours de laquelle des pâtons de pâte boulangère sont fournis.

Selon un mode de réalisation particulier, les pâtons de pâte pré poussée sont reçus surgelés et décongelés au cours de ladite étape de fourniture et l'étape de fourniture consiste alors à décongeler les pâtons de pâte surgelés.

Dans le mode de réalisation de l'invention présenté ici, l'étape de fourniture comporte une deuxième étape de préparation 104 et une troisième étape de préparation 106.

Au cours de la deuxième étape de préparation 104, la pâte de la partie boulangère est préparée. La deuxième étape de préparation 104 comporte entre autres une sous-étape de formulation qui consiste à mélanger les ingrédients qui composent la pâte de la partie boulangère, une sous-étape de pétrissage et une sous-étape de fermentation qui constitue une première fermentation de la partie boulangère.

Au cours de la troisième étape de préparation 106, la pâte issue de la deuxième étape de préparation 104 subit entre autres une sous-étape de division au cours de laquelle des pâtons sont formés et une sous-étape de formage au cours de laquelle chaque pâton est conformé selon la forme souhaitée de la partie boulangère.

Le procédé de préparation 100 comporte ensuite une étape de conditionnement 108 au cours de laquelle les pâtons ainsi fournis et les ingrédients ainsi préparés sont assemblés dans un ensemble et disposés dans une poche étanche et scellée sous-vide d'air.

Cela peut consister par exemple à déposer des ingrédients entre deux pâtons afin de constituer à terme un sandwich avec les ingrédients à l'intérieur.

La poche étanche peut prendre toutes les formes possibles comme par exemple une poche souple ou une barquette.

Le procédé de préparation 100 se poursuit alors par une étape de fermentation 110 au cours de laquelle les pâtons contenus dans l'ensemble constitué des pâtons et des ingrédients et enfermé dans la poche scellée subissent une fermentation sous l'effet combiné des levures et de la température. Après la fermentation de la partie boulangère, les pâtons se transforment en pain aéré prêt à cuire.

Selon un mode de réalisation particulier, l'étape de fermentation s'effectue sur une durée comprise entre 30 minutes et 24 heures, et dans une plage de température comprise entre 5°C et 40°C.

L'ensemble dans sa poche scellée subit alors une étape de cuisson 112 au cours de laquelle l'ensemble ainsi fermenté dans la poche scellée est soumis à une cuisson en particulier dans un four. La cuisson s'effectue par exemple sur une durée comprise entre 1 heure et 3 heures, et dans une plage de température comprise entre 80 °C et 220 °C.

L'ensemble subit alors une étape de refroidissement 114 au cours de laquelle l'ensemble dans la poche scellée est refroidi. Cette étape de refroidissement 114 peut être réalisée par exemple par introduction de l'ensemble dans la poche scellée dans une enceinte réfrigérée par exemple sur une durée comprise entre 1 heure et 5 heures et dans une plage de température comprise entre -20 °C et + 10 °C. Selon un autre mode de réalisation, l'ensemble dans la poche scellée peut être plongé dans un fluide maintenu à très basse température comme par exemple de la saumure à -18 °C.

Suite à l'étape de refroidissement 114, le procédé de préparation 100 peut comporter une étape de surgélation 116 de l'ensemble dans la poche scellée.

Le procédé de préparation 100 permet d'obtenir un ensemble pasteurisé dans son emballage en sortie de l'étape de cuisson 112, ce qui lui procure une durée de vie importante sans détérioration organoleptique ou microbiologique des composants.

En outre, l'ensemble étant protégé dans la poche scellée, il peut être surgelé sans risque de contamination ou détérioration des propriétés de surface et l'ensemble n'est pas touché et peut être remis en température dans son emballage sans risque de contamination.

La sécurité alimentaire est garantie par la destruction des microorganismes durant l'étape de cuisson 112.

Comme précisé ci-dessus, les ingrédients peuvent être cuits ou crus avant l'introduction dans la poche sous vide, mais, pour un gain de temps, il est préférable d'introduire des ingrédients crus qui seront cuits en même temps que la pâte à pain lors de l'étape de cuisson 112. Ainsi, lors de la première étape de préparation 102, les ingrédients utilisés sont crus.

Afin d'améliorer l'aspect visuel de la surface extérieure du pain en fin de procédé de préparation 100, une étape de coloration superficielle peut être mise en œuvre entre l'étape de préparation 106 et l'étape de conditionnement 108. Cette étape de coloration consiste à colorer la surface extérieure des pâtons, par exemple en appliquant une haute température de 220 °C pendant 3 minutes à la surface extérieure du pâton au moyen de rayonnements infrarouges ou par contact avec une bande transporteuse chauffée à cette température.

De la même manière, les ingrédients peuvent être colorés en surface au cours de la première étape de préparation 102. Un exemple de ce type de coloration consiste à griller un filet de poulet pendant 2 minutes en l'exposant à une température de 220 °C pour obtenir une modification visuelle de sa surface sans pour autant le cuire à cœur par contact direct ou indirect avec une source chaude maintenue à haute température.

Afin de décoller la poche de la surface supérieure de la partie boulangère, le procédé de préparation 100 comporte au cours de l'étape de conditionnement et après la mise sous vide d'air, une étape d'injection de dioxyde de carbone ou d'azote au cours de laquelle ledit gaz est injecté avant scellage de la poche.

## Revendications

1. Procédé de préparation (100) d'un produit alimentaire comportant une partie boulangère et des ingrédients, ledit procédé (100) comportant :
- une première étape de préparation (102) au cours de laquelle les ingrédients sont préparés,
- une étape de fourniture (104, 106) au cours de laquelle des pâtons sont fournis,
- une étape de conditionnement (108) au cours de laquelle les pâtons ainsi fournis et les ingrédients ainsi préparés sont assemblés dans un ensemble et disposés dans une poche étanche et scellée sous-vide d'air,
- une étape de fermentation (110) au cours de laquelle les pâtons contenus dans l'ensemble constitué des pâtons et des ingrédients et enfermé dans la poche scellée, subissent une fermentation,
- une étape de cuisson (112) au cours de laquelle l'ensemble ainsi fermenté dans la poche scellée est soumis à une cuisson, et
- une étape de refroidissement (114) au cours de laquelle l'ensemble dans la poche scellée est refroidi.

2. Procédé de préparation (100) selon la revendication 1, **caractérisé en ce que**, suite à l'étape de refroidissement (114), il comporte une étape de surgélation (116) de l'ensemble dans la poche scellée.

3. Procédé de préparation (100) selon l'une des revendications 1 ou 2, **caractérisé en ce que** lors de la première étape de préparation (102), les ingrédients utilisés sont crus.

4. Procédé de préparation (100) selon l'une des revendications 1 à 3, **caractérisé en ce que** l'étape de fourniture consiste à décongeler des pâtons de pâte surgelés.

5. Procédé de préparation (100) selon l'une des revendications 1 à 3, **caractérisé en ce que** l'étape de fourniture comporte une deuxième étape de préparation (104) au cours de laquelle la pâte de la partie boulangère est préparée, et une troisième étape de préparation (106) au cours de laquelle la pâte issue de la deuxième étape de préparation (104) subit une sous-étape de division au cours de laquelle des pâtons sont formés et une sous-étape de formage au cours de laquelle chaque pâton est conformé selon la forme souhaitée de la partie boulangère.

6. Procédé de préparation (100) selon l'une des revendications 4 ou 5, **caractérisé en ce qu'**il comporte entre l'étape de préparation (106) et l'étape de conditionnement (108), une étape de coloration superficielle au cours de laquelle la surface extérieure des pâtons est colorée.

7. Procédé de préparation (100) selon l'une des revendications 1 à 6, **caractérisé en ce que** les ingrédients sont colorés en surface au cours de la première étape de préparation (102).

8. Procédé de préparation (100) selon l'une des revendications 1 à 7, **caractérisé en ce qu'**il comporte au cours de l'étape de conditionnement (108) et après la mise sous vide d'air, une étape d'injection de dioxyde de carbone ou d'azote au cours de laquelle ledit gaz est injecté avant scellage de la poche.

## Patentansprüche

1. Zubereitungsverfahren (100) eines Lebensmittelprodukts, das einen Backwarenteil und Zutaten aufweist, wobei das Verfahren (100) umfasst:
- einen ersten Schritt der Zubereitung (102), in dem die Zutaten zubereitet werden,
- einen Schritt der Bereitstellung (104, 106), in dem Teiglinge bereitgestellt werden,
- einen Schritt der Konditionierung (108), in dem die so bereitgestellten Teiglinge und die so zubereiteten Zutaten zu einer Gesamtheit zusammengefügt und in einem dichten und vakuumversiegelten Beutel angeordnet werden,
- einen Schritt der Gärung (110), in dem die Teiglinge, die in der aus den Teiglingen und den Zutaten bestehenden und in dem versiegelten Beutel eingeschlossenen Gesamtheit enthalten sind, einer Gärung unterliegen,
- einen Schritt des Backens (112), in dem die so in dem versiegelten Beutel gegärte Gesamtheit einem Backvorgang unterzogen wird, und
- einen Schritt der Kühlung (114) in dem die Gesamtheit in dem versiegelten Beutel gekühlt wird.

2. Zubereitungsverfahren (100) nach Anspruch 1, **dadurch gekennzeichnet, dass** es im Anschluss an den Schritt der Kühlung (114) einen Schritt des Tiefgefrierens (116) der Gesamtheit in dem versiegelten Beutel umfasst.

3. Zubereitungsverfahren (100) nach einem der Ansprüche 1 oder 2, **dadurch gekennzeichnet, dass** im ersten Schritt der Zubereitung (102) die verwendeten Zutaten roh sind.

4. Zubereitungsverfahren (100) nach einem der Ansprüche 1 bis 3, **dadurch gekennzeichnet, dass** der Schritt der Bereitstellung darin besteht, tiefgefrorene Teiglinge aufzutauen.

5. Zubereitungsverfahren (100) nach einem der Ansprüche 1 bis 3, **dadurch gekennzeichnet, dass** der Schritt der Bereitstellung einen zweiten Schritt der Zubereitung (104) umfasst, in dem der Teig des Backwarenteils zubereitet wird, und einen dritten Schritt der Zubereitung (106), in dem der im zweiten Schritt der Zubereitung (104) erhaltene Teig einem Teilschritt der Aufteilung, in dem Teiglinge gebildet werden, und einem Teilschritt der Formung, in dem jeder Teigling entsprechend der gewünschten Form des Backwarenteils geformt wird, unterliegt.

6. Zubereitungsverfahren (100) nach einem der Ansprüche 4 oder 5, **dadurch gekennzeichnet, dass** es zwischen dem Schritt der Zubereitung (106) und dem Schritt der Konditionierung (108) einen Schritt der Oberflächenfärbung umfasst, in dem die Außenfläche der Teiglinge gefärbt wird.

7. Zubereitungsverfahren (100) nach einem der Ansprüche 1 bis 6, **dadurch gekennzeichnet, dass** die Zutaten im ersten Schritt der Zubereitung (102) an der Oberfläche gefärbt werden.

8. Zubereitungsverfahren (100) nach einem der Ansprüche 1 bis 7, **dadurch gekennzeichnet, dass** es im Schritt der Konditionierung (108) und nach der Herstellung des Luftvakuums einen Schritt der Einspritzung von Kohlendioxid oder Stickstoff umfasst, in dem dieses Gas vor Versiegelung des Beutels eingespritzt wird.

## Claims

1. Method (100) for preparing a food product comprising a bakery part and ingredients, said method (100) comprising:
- a first preparation step (102) during which the ingredients are prepared,
- a supply step (104, 106) during which pieces of dough are supplied,
- a conditioning step (108) during which the pieces of dough thus supplied and the ingredients thus prepared are collected in an assembly and disposed in an airtight bag and sealed under air sous vide,
- a fermentation step (110) during which the pieces of dough contained in the assembly consisting of pieces of dough and ingredients and enclosed in the sealed bag undergo fermentation,
- a cooking step (112) during which the assembly thus fermented in the sealed bag is subjected to cooking, and
a cooling step (114) during which the assembly in the sealed bag is cooled.

2. Preparation method (100) according to claim 1, **characterised in that**, following the cooling step (114), it comprises a step (116) of freezing the assembly in the sealed bag.

3. Preparation method (100) according to one of claims 1 or 2, **characterised in that**, during the first preparation step (102), the ingredients used are raw.

4. Preparation method (100) according to one of claims 1 to 3, **characterised in that** the supply step consists of thawing frozen pieces of dough.

5. Preparation method (100) according to one of claims 1 to 3, **characterised in that** the supply step comprises a second preparation step (104) during which the dough of the bakery part is prepared, and a third preparation step (106) during which the dough coming from the second preparation step (104) is subjected to a division sub-step during which pieces of dough are formed and a forming sub-step during which each piece of dough is shaped according to the required shape of the bakery part.

6. Preparation method (100) according to one of claims 4 or 5, **characterised in that** it comprises, between the preparation step (106) and the conditioning step (108), a surface-colouring step during which the external surface of the pieces of dough is coloured.

7. Preparation method (100) according to one of claims 1 to 6, **characterised in that** the ingredients are coloured on the surface during the first preparation step (102).

8. Preparation method (100) according to one of claims 1 to 7, **characterised in that** it comprises, during the conditioning step (108) and after putting under air sous vide, a step of injecting carbon dioxide or nitrogen during which said gas is injected before sealing the bag.
